Europäisches Patentamt

European Patent Office

Office européen des brevets

(19)

(11) Veröffentlichungsnummer: **0 005 781**
**B1**

(12) **EUROPÄISCHE PATENTSCHRIFT**

(45) Veröffentlichungstag der Patentschrift:
04.11.81

(21) Anmeldenummer: 79101539.9

(22) Anmeldetag: 21.05.79

(51) Int. Cl.³: **C 09 J 3/16**, C 09 J 5/06,
**C 08 G 18/08**

(54) Verfahren zum Verkleben von Werkstoffen.

(30) Priorität: 03.06.78 DE 2824501

(43) Veröffentlichungstag der Anmeldung:
12.12.79 Patentblatt 79/25

(45) Bekanntmachung des Hinweises auf die Patenterteilung:
04.11.81 Patentblatt 81/44

(84) Benannte Vertragsstaaten:
DE FR GB IT

(56) Entgegenhaltungen:
FR-A-1 516 206
FR-A-2 052 533
FR-A-2 241 602
FR-A-2 303 058

(73) Patentinhaber: BAYER AG, Zentralbereich Patente, Marken und Lizenzen, D-5090 Leverkusen 1, Bayerwerk (DE)

(72) Erfinder: Hombach, Rudolf, Dr., Roggendorfstrasse 63, D-5000 Köln 80 (DE)
Erfinder: Müller-Albrecht, Horst, Dr., Roggendorfstrasse 59, D-5000 Köln 80 (DE)
Erfinder: Dollhausen, Manfred, Dr., Herzogenfeld 21, D-5068 Odenthal (DE)

0 005 781

Verfahren zum Verkleben von Werkstoffen

Die vorliegende Erfindung betrifft ein neuartiges Verfahren zum Kleben von Werkstoffen unter Verwendung von Klebstoffen auf Polyurethanbasis.

Es ist bekannt, zum Kleben der verschiedensten Werkstoffe kautschukartige Hydroxylpolyurethane zu verwenden. Derartige Klebstoffe sind z. B. in der DE-PS 1 256 822 beschrieben. Diese Klebstoffe werden als Lösungen in organischen Lösungsmitteln, wie Aceton, Methylethylketon oder Ethylacetat auf die zu klebenden Flächen aufgebracht. Nach weitgehendem Austritt der in ihnen enthaltenen Lösungsmittel zeigen diese Klebstoffe eine starke Kontakthaftung, d. h. sobald die Klebflächen miteinander in Berührung gebracht werden, haften sie mit hoher Festigkeit aneinander. Diese Kontakthaftung kann an länger gelagerten, praktisch trockenen Klebstoffaufstrichen durch kurzzeitige Erwärmung erreicht werden.

Nachteilig ist bei diesen Klebstoffen der sehr hohe Lösungsmittelgehalt von 70 oder mehr Gew.-%, der zum Lösen der Polyurethane und zum Einstellen der für die Verarbeitung notwendigen Viskosität der Lösungen erforderlich ist, und zwar nicht nur der ungünstigen physiologischen Wirkung der Lösungsmittel wegen, die zu aufwendigen Absaugvorrichtungen zwingt, sondern auch beim Kleben von z. B. dünnen Folien oder Schaumstoffen, wo dieser hohe Lösungsmittelgehalt zu Quellungen oder gar zu völligen Deformation Anlaß geben kann.

Die Verwendung kautschukartiger Hydroxylpolyurethane in Form von Schmelzklebstoffen führte nicht zu dem gewünschten Erfolg, da bei den Temperaturen, die zur Überführung der Produkte in einen für die Benetzung der Oberfläche ausreichend fließfähigen Zustand notwendig sind, oft eine deutliche Zersetzung des Klebstoffes eintritt. Bei wärmeempfindlichen Werkstoffen kann darüber hinaus eine Schädigung des Materials eintreten.

Bei Raumtemperatur flüssige Reaktionsklebstoffe auf Basis von Polyhydroxyl-Verbindungen und Polyisocyanaten, wie sie z. B. in der DE-OS 1 719 123 beschrieben sind, zeigen gegenüber den kautschukartigen Hydroxylpolyurethan-Klebstoffen den wesentlichen Nachteil, daß die mit diesen Klebstoffen hergestellten Klebungen eine sehr geringe Anfangsfestigkeit aufweisen. Zur Überwindung dieser Schwierigkeit wird nach dem in der DE-OS 2 609 266 beschriebenen Verfahren ein niedrigschmelzendes NCO-gruppenhaltiges Polyurethan auf das zu klebende Material aufgetragen und dieses mit einem Kettenverlängerungsmittel, das mindestens 2 aktive Wasserstoffatome liefert, in ein kautschukartiges Polyurethan überführt. Durch Erwärmen wird das so gebildete Polyurethan in einen klebfähigen Zustand überführt. Als Kettenverlängerungsmittel wird Wasserdampf vorgeschlagen.

Nachteilig bei diesem Verfahren ist, daß das Kettenverlängerungsmittel von der Oberfläche her mit dem NCO-gruppenhaltigen Polyurethan reagiert. Die Abbindegeschwindigkeit des aufgetragenen Klebstoffes ist daher abhängig von seiner Schichtdicke. Bei größeren Schichtdicken, die vor allem in der Praxis bei Materialien mit ungleichmäßiger Oberfläche häufig vorkommen, führt dies zu sehr langen Reaktionszeiten.

Wie nun überraschenderweise gefunden wurde, lassen sich Klebungen mit ausgezeichneter Anfangsfestigkeit nach dem Prinzip der Zweikomponenten-Polyurethan-Klebstoffe dann herstellen, wenn man Reaktionsgemische aus Polyhydroxylverbindungen und Polyisocyanaten auf die zu klebenden Werkstoffoberflächen aufträgt und anschließend die gebildeten kautschukartigen Polyurethan-Klebschichten wie nachstehend näher beschrieben, in einen klebfähigen Zustand überführt.

Gegenstand der vorliegenden Erfindung ist ein Verfahren zum Verkleben von Werkstoffen durch Beschichtung der Oberfläche mindesetns eines der miteinander zu verklebenden Werkstoffe mit einem kautschukartigen Polyurethan, Aktivierung der so erhaltenen Beschichtung durch Einwirkung von Wärme und/oder Lösungsmitteln und Beendigung des Klebevorgangs durch Vereinigung der zu verklebenden Werkstoffoberflächen, gegebenenfalls unter Anwendung von Druck, dadurch gekennzeichnet, daß man auf die Oberfläche mindestens eines der zu verklebenden Werkstoffe eine im nichtaktivierten Zustand nichtklebende Polyurethanschicht dadurch aufbringt, daß man die Oberfläche mit einem im wesentlichen lösungsmittelfreien, zu einem kautschukartigen Polyurethan ausreagierenden, mindestens ein organisches Polyisocyanat und mindestens eine organische Polyhydroxylverbindung des Molekulargewichtsbereichs 62 bis 10 000 in, einem molaren NCO/OH-Verhältnis von 0,8 bis 1,2 entsprechenden, Mengen enthaltenden Reaktionsgemisch, welches durch sorgfältiges Misches der Komponenten bei Raumtemperatur oder wenig höherer Temperatur erhalten worden ist, beschichtet und die so erhaltene Schicht zu einem nichtklebenden, durch Einwirkung von Wärme und/oder Lösungsmitteln in den klebefähigen Zustand überführbaren Polyurethan ausreagieren läßt.

Das erfindungsgemäße Verfahren eignet sich insbesondere zur lösungsmittelfreien Verklebung beliebiger Werkstoffoberflächen. Die mit der Wärme- bzw. Lösungsmittel-aktivierbaren Schicht versehenen Werkstoffe können gelagert und bei Bedarf durch Wärme- oder Lösungsmitteleinwirkung in einen klebefähigen Zustand überführt werden.

Wesentliche Komponenten in den beim erfindungsgemäßen Verfahren einzusetzenden Beschichtungsmitteln sind vorzugsweise bei Raumtemperatur oder bei mäßig erhöhter Temperatur (bis ca. 60°C) flüssige Polyhydroxylverbindungen und Polyisocyanate, die sich bei Raumtemperatur bzw. mäßig erhöhter Temperatur (bis ca. 60°) zu einem flüssigen Reaktionsgemisch vereinigen lassen. Die Mitverwendung geringer Mengen an sich bekannter Lösungsmittel wie z. B. Methyläthylketon oder Butylacetat zwecks Einstellung einer geeignet niedrigen Viskosität ist prinzipiell möglich, im allgemeinen jedoch nicht erforderlich.

Bei dem erfindungsgemäßen Verfahren können beliebige Polyisocyanate eingesetzt werden, soweit sie die vorgenannten Eigenschaften aufweisen. Vorzugsweise werden Diisocyanate $Q(NCO)_2$ eingesetzt, wobei Q einen aliphatischen Kohlenwasserstoffrest mit 4 bis 12 Kohlenstoffatomen, einen aromatischen oder cycloaliphatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzenden Diisocyanate sind Tetramethylendiisocyanat, Hexamethylendiisocyanat, Dodekamethylendiisocyanat, 1,4-Diisocyanato-cyclohexan, 1-Isocyanato-3,3,5-trimethyl-5-isocyanatomethylcyclohexan, 4,4-Diisocyanato-dicyclohexylmethan, 4,4'-Diisocyanato-dicyclohexylpropan-(2,2), 4,4-Diisocyanato-diphenylmethan, 2,4'-Diisocyanato-diphenylmethan, 4,4'-Diisocyanatodiphenylpropan-(2,2), p-Xylylen-diisocyanat oder Tetramethyl-m- oder p-Xylylen-diisocyanat, sowie aus diesen Verbindungen bestehende Gemische.

Es ist selbstverständlich auch möglich, die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit) zu verwenden.

Vorzugsweise werden beim erfindungsgemäßen Verfahren bei Raumtemperatur flüssige aromatische Diisocyanate, insbesondere 2,4-Diisocyanatotoluol gegebenenfalls im Gemisch mit bis zu 40 Gew.-% 2,6-Diisocyanatotoluol oder flüssige Diisocyanate der Diphenylmethanreihe eingesetzt. Unter »flüssigen Diisocyanaten der Diphenylmethanreihe« sind hierbei insbesondere bei Raumtemperatur flüssige Isomerengemische des 2,4'- und des 4,4'-Diisocyanatodiphenylmethans, sowie durch chemische Modifizierung verflüssigte Diisocyanatodiphenylmethan-Derivate zu verstehen. Zu den letztgenannten Derivaten gehören insbesondere die Umsetzungsprodukte von 4,4'- und gegebenenfalls 2,4'-Diisocyanatodiphenylmethan mit unterschüssigen Mengen an Glykolen wie sie beispielsweise in DE-PS 1 618 380, DE-OS 2 347 207, US-PS 3 394 164 oder US-PS 3 644 457 beschrieben sind, oder um Carbodiimid- bzw. Uretonimingruppen aufweisende, verflüssigte Diphenylmethandiisocyanat-Derivate, wie sie beispielsweise in DE-OS 2 622 104, DE-PS 1 092 007, DE-AS 1 568 501, DE-AS 1 643 137, DE-OS 2 537 685 oder DE-OS 2 606 419 beschrieben sind.

Bei den beim erfindungsgemäßen Verfahren einzusetzenden Polyhydroxylverbindungen handelt es sich um mindestens 2 Hydroxylgruppen aufweisende Verbindungen des Molekulargewichtsbereichs 62 – 10 000.

Bevorzugt werden die entsprechenden Dihydroxyverbindungen eingesetzt. Die Mitverwendung von im Sinne der Isocyanat-Polyadditionsreaktion tri- oder höherfunktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck. Zur Gewährleistung der kautschukähnlichen Eigenschaften des ausreagierten Polyurethans ist es jedoch erforderlich, einen zu hohen Vernetzungsgrad zu vermeiden. Die mittlere Funktionalität aller polyurethanbildenden Aufbaukomponenten liegt daher vorzugsweise zwischen 2 und 2,2. Besonders bevorzugt werden ausschließlich difunktionelle Aufbaukomponenten eingesetzt.

Vorzugsweise einzusetzende Hydroxyl-Verbindungen sind die in der Polyurethan-Chemie an sich bekannten Hydroxypolyester, Hydroxypolyether, Hydroxypolythioether, Hydroxypolyacetate, Hydroxypolycarbonate und/oder Hydroxypolyesteramide. Die in Frage kommenden Hydroxyl-Gruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren, wie Ölsäure, gegebenenfalls in Mischung mit monomeren Fettsäuren, Terephthalsäuredimethylester, Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylenglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diethylenglykol, Triethylenglykol, Tetraethylenglykol, Polyethylenglykol, Dipropylenglykol, Polypropylenglykol, Dibutylenglykol und Polybutylenglykol in Frage. Die Polyester können anteilig endständige Carboxylgruppen aufweisen. Auch Polyester aus Lactonen, z. B. ε-Caprolacton oder Hydroxycarbonsäuren, wie z. B. ω-Hydroxycapronsäure, sind einsetzbar. Auch die erfindungsgemäß in Frage kommenden, vorzugsweise zwei Hydroxylgruppen aufweisenden Polyäther sind solche der an sich bekannten Art und werden z. B. durch Polymerisation von Epoxiden, wie Ethylenoxid, Propylenoxid, Butylenoxid, Tetrahydrofuran, Styroloxid oder Epichlorhydrin mit sich selbst, z. B. in Gegenwart von BF₃, oder durch Anlagerung dieser Epoxide, gegebenenfalls im Gemisch oder nacheinander, an vorzugsweise zweiwertigen Startkomponenten mit reaktionsfähigen Wasserstoffatomen, wie Alkohole oder Phenole, wie z. B. Ethylenglykol, Propylenglykol-(1,3) oder -(1,2), 4,4'-Dihydroxydiphenylpropan oder Wasser hergestellt.

Auch durch Vinyl-polymerisate modifizierte Polyether, wie sie z. B. durch Polymerisation von Styrol, Acrylnitril in Gegenwart von Polyethern entstehen (amerikanische Patentschriften 3 383 351, 3 304 273, 3 523 093, 3 110 695, deutsche Patentschrift 1 152 536), sind ebenfalls geeignet jedoch weniger bevorzugt. Die anteilig gegebenenfalls mitzuverwendenden höherfunktionellen Polyether entstehen in analoger Weise durch an sich bekannte Alkoxylierung von höherfunktionellen Startermolekülen, z. B. Ammoniak, Ethanolamin, Ethylendiamin oder Sucrose.

Unter den im Prinzip ebenfalls geeigneten, jedoch weniger bevorzugten Polythioethern seien insbesondere die Kondensationsprodukte von Thioglykol mit sich selbst und/oder mit anderen Glykolen, Dicarbonsäuren, Formaldehyd, Aminocarbonsäuren oder Aminoalkoholen angeführt. Je nach den CO-Komponenten handelt es sich bei den Produkten um Polythiomischether, Polythioetherester, Polythioetheresteramide.

Als ebenfalls geeignete, jedoch weniger bevorzugte Polyacetale kommen z. B. die aus Glykolen, wie Diethylenglykol, Triethylenglykol, 4,4'-Dioäthoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als ebenfalls geeignete, jedoch weniger bevorzugte Hydroxylgruppen aufweisende Polycarbonate kommen solche der an sich bekannten Art in Betracht, die z. B. durch Umsetzung von Diolen, wie Propandiol-(1,3), Butandiol-(1,4) und/oder Hexandiol-(1,6), Diethylenglykol, Triethylenglykol, Tetraethylenglykol mit Diarylcarbonaten, z. B. Diphenylcarbonat oder Phosgen, hergestellt werden können.

Zu den ebenfalls geeigneten, jedoch weniger bevorzugten Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkohole, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Selbstverständlich können auch einfache Glykole, wie z. B. Ethylen-, Propylen- oder Hexamethylenglykol mitverwendet werden.

Vertreter dieser zu verwendenden Verbindungen sind z. B. in High Polymers, Vol, XVI, »Polyurethanes, Chemistry and Technology«, verfaßt von Saunders — Frisch, Interscience Publishers, New York, London, Band I, 1962, Seiten 32 — 42 und Seiten 44 — 54 und Band II, 1964, Seiten 5 und 6 und 198 — 199, sowie im »Kunststoff-Handbuch«, Band VII, Vieweg — Höchtlen, Carl-Hanser-Verlag, München, 1966, z. B. auf den Seiten 45 — 71, beschrieben.

Bevorzugt werden beim erfindungsgemäßen Verfahren Dihydroxypolyester mit einem Moleklargewicht von über 700, insbesondere 2000 — 4000, oder Gemische aus solchen Dihydroxylpolyestern und Diolen oder auch gegebenenfalls Triolen der oben beispielhaft genannten Art vom Molekulargewicht 62 bis ca. 300 eingesetzt. Die genannten niedermolekularen Polyole werden im allgemeinen bezogen auf die höhermolekularen Polyole, vorzugsweise Dihydroxypolyester, in einer Menge von 0 bis 100, vorzugsweise 0 bis 60 OH-Äquivalentprozent eingesetzt.

Beim erfindungsgemäßen Verfahren werden die Reaktionskomponenten in einem molaren NCO/OH-Verhältnis von 0,8 bis 1,2, vorzugsweise 0,90 — 1,10, entsprechenden Mengenverhältnis eingesetzt.

Beim erfindungsgemäßen Verfahren werden die Polyhydroxyl-Komponente und die Diisocyanat-Komponente bei Raumtemperatur oder wenig höherer Temperatur sorgfältig gemischt.

Bei der Verwendung von bei Raumtemperatur festen Komponenten werden diese vorher aufgeschmolzen. Das Gemisch stellt während eines Zeitraumes von 5 — 60 Minuten eine Flüssigkeit verhältnismäßig niedriger Viskosität dar und läßt sich mit einfachen Geräten, z. B. einem Pinsel, auf die zu klebenden Materialien auftragen. Vorteilhaft läßt sich der Misch- und Auftragsvorgang mit bekannten Zweikomponenten-Dosieranlagen durchführen. Erforderlichenfalls kann die Reaktion auch durch Mitverwendung von an sich bekannten Katalysatoren für die NCO/OH-Reaktion beschleunigt werden. Geeignete Katalysatoren sind z. B. tertiäre Amine, wie Triethylendiamin, N,N'-Diethylpiperazin, Endomethylenpiperazin, oder organische Metallverbindungen, insbesondere Zinnverbindungen, wie z. B. Dibutylzinndilaurat. Die Katalysatoren werden gegebenenfalls in Mengen von 0,01 bis 5, vorzugsweise 0,03 bis 3,0 Gew.-%, bezogen auf das Reaktionsgemisch, zugesetzt.

Nach Beschichten der zu klebenden Werkstoffe werden diese bei Raumtemperatur gelagert. Die während der Lagerung ablaufende Polyurethanbildungsreaktion kann durch Anwendung höherer Temperaturen wie z. B. 25 bis 120° C, beschleunigt werden.

Nach Beendigung der NCO-Polyadditionsreaktion liegen dann bei Raumtemperatur nichtklebende Beschichtungen vor, die zu einem beliebigen Zeitpunkt nach ihrer Herstellung durch Einwirkung von Wärme und/oder Lösungsmittel in den klebefähigen Zustand überführt werden können. Die Wärmeaktivierung erfolgt vorzugsweise durch Strahlung, z. B. Infrarotbestrahlung, wobei die Klebstoffoberfläche innerhalb kurzer Zeit, z. B. von 2 bis 30 Sekunden, auf eine Temperatur von 50 bis 150°C, vorzugsweise auf 70 bis 100°C erwärmt wird. Anschließend werden die Klebstoffschichten wie üblich, vorzugsweise unter Preßdruck zusammengefügt.

Es ist durchaus auch möglich, bei der Durchführung des erfindungsgemäßen Verfahrens lediglich einen der zur verklebenden Werkstoffe erfindungsgemäß zu beschichten und einen zweiten nichtbeschichteten Werkstoff nach und/oder unter gleichzeitiger Hitzeaktivierung der Klebstoffschicht des beschichteten Werkstoffs mit diesem zu vereinigen. Eine »gleichzeitige Aktivierung« kann dadurch erreicht werden, daß der nichtbeschichtete Werkstoff vor seiner Vereinigung mit dem beschichteten Werkstoff auf eine Temperatur gebracht wird, die zur Aktivierung der Klebstoffschicht ausreicht. Eine Variante des letztgenannten Prinzips besteht beispielsweise darin, daß man einen auf beispielsweise 120 bis 200°C erhitzten und dadurch verflüssigten thermoplastischen Kunststoff, z. B. ein Weichmacher-haltiges Vinylchloridpolymerisat, im Spritzgußverfahren auf eine mit einer Wärme-aktivierbaren Schicht versehene Oberfläche aufbringt.

Zur Aktivierung der bei Raumtemperatur nichtklebenden Schicht mit Lösungsmitteln genügt es oft, die Klebstoffschicht mit einem geeigneten Lösungsmittel wie z. B. Methyläthylketon, Aceton, Tetrahydrofuran, Dimethylformamid oder Äthylacetat zu besprühen, das Lösungsmittel kurze Zeit beispielsweise 1 bis 3 Sekunden einwirken zu lassen, um anschließend die beschichteten und zu verklebenden Oberflächen gegebenenfalls unter Druck zusammenzubringen. Auch hier ist es im Prinzip ausreichend, lediglich eine der zu verklebenden Oberflächen erfindungsgemäß zu beschichten.

Beim erfindungsgemäßen Verfahren wird das zum Polyurethan ausreagierende Reaktionsgemisch im allgemeinen in Mengen eingesetzt, die einer Gesamtdicke der Klebstoffschicht von 0,001 bis 2, vorzugsweise 0,03 bis 0,4 mm, entsprechen. Je nach Art der zu verklebenden Substrate kann diese Menge selbstverständlich innerhalb der genannten breiten Bereiche schwanken. Die optimale Menge kann in einfachen orientierenden Vorversuchen zuverlässig ermittelt werden.

Zur Erreichung spezieller Eigenschaften, z. B. zur Verlängerung der Kontaktbindezeit, können dem beschriebenen Reaktionsgemisch natürliche oder synthetische Harze, wie z. B. Phenolharze, Ketonharze, Colophoniumderivate, Phthalatharze, Acetyl- oder Nitrocellulose oder andere Stoffe, wie z. B. Silikatfüllstoffe, zugefügt werden.

Mit dem erfindungsgemäßen Verfahren können beliebige Werkstoffe, insbesondere Papier, Pappe, Holz, Metall und Leder mit hoher Festigkeit geklebt werden. Bevorzugt eignet es sich zum Kleben von Gummimaterialien, insbesondere auch von Kunststoffen, u. a. Polyurethan-Schaumstoffen mit kompakter Oberfläche und — soweit das Reaktionsgemisch insbesondere bezüglich der Konstitution des eingesetzten Polyesterdiols der Lehre der DE-PS 1 256 822 entspricht — weichmacherhaltigen Homo- oder Mischpolymerisaten des Vinylchlorid, vor allem zum Kleben von Sohlen aus diesen Materialien auf Schuhschäfte aus Leder oder Syntheseleder.

Beispiel 1

100 g eines auf 50°C erwärmten linearen Polyesters aus Adipinsäure und Hexandiol vom Molekulargewicht 2800 wurden mit 0,05 g Endoethylenpiperazin gründlich vermischt. In diese Mischung wurden 9 g eines flüssigen Gemisches aus ca. 60% 2,4'- und ca. 40% 4,4'-Diisocyanato-diphenylmethan sorgfältig verteilt.

Das molare NCO/OH-Verhältnis der Mischung betrug 1,0, ihre Topfzeit 8 Minuten.

Mit dieser Mischung wurden nach DIN 53 273 Klebungen hergestellt. Als Werkstoff diente ein 4 mm dickes PVC-Material aus 70 Gew.-Teilen Polyvinylchlorid (K-Wert 80) und 30 Gew.-Teilen Dioctylphthalat als Weichmacher sowie 5 Gew.-Teilen epoxiertem Sojabohnenöl und 1,2 Gew.-Teilen Barium-Cadmium-Laurat.

Vor dem Aufbringen der Klebstoffe wurden die zu klebenden Oberflächen der auf Streifen von 15 cm Länge und 3 cm Breite geschnittenen Werkstoffe mit Schleifband der Körnung 40 gründlich gerauht. Die vom Schleifstaub befreiten Werkstoffe wurden jeweils mit einer ca. 0,1 mm dicken Klebstoffschicht versehen. Nach den in der Tabelle aufgeführten Zeiten wurde die Klebstoffoberfläche durch Strahlungswärme innerhalb von 3 Sekunden auf eine Temperatur von 80−85°C gebracht. Danach wurde unmittelbar zusammengefügt und 10 Sekunden mit einem Druck von 0,4 N/mm$^2$ gepreßt.

Die Ermittlung des Schälwiderstandes der Klebung erfolgt sofort und nach 9 Tagen nach dem Preßvorgang.

## Beispiel 2

100 g eines auf 50°C erwärmten linearen Polyesters aus Adipinsäure und Hexandiol vom Molekulargewicht 2800 wurden mit 0,05 g Endoethylenpiperazin gründlich vermischt. In diese Mischung wurden 9,9 g eines flüssigen Gemisches aus ca. 60% 2,4'- und ca. 40% 4,4'-Diisocyanato-diphenylmethan sorgfältig verteilt.

Das molare NCO/OH-Verhältnis der Mischung betrug 1,1, ihre Topfzeit 7 Minuten.

Die Prüfung erfolgte wie in Beispiel 1.

## Beispiel 3

100 g eines auf 50°C erwärmten linearen Polyesters aus Adipinsäure und Hexandiol vom Molekulargewicht 2800 wurden mit 0,05 g Endoethylenpiperazin und 0,3 g Trimethylolpropan gründlich vermischt. In diese Mischung wurden 9,9 g eines flüssigen Gemisches aus ca. 60% 2,4'- und ca. 40% 4,4'-Diisocyanato-diphenylmethan sorgfältig verteilt.

Das molare NCO/OH-Verhältnis der Mischung betrug 1,0, ihre Topfzeit 8 Minuten.

Die Prüfung erfolgte wie in Beispiel 1.

## Beispiel 4

100 g eines auf 50°C erwärmten linearen Polyesters aus Adipinsäure und Hexandiol vom Molekulargewicht 2800 wurden mit 0,05 g Endoethylenpiperazin und 0,3 g Trimethylolpropan gründlich vermischt. In diese Mischung wurden 10,9 g eines flüssigen Gemisches aus ca. 60% 2,4'- und 40% 4,4'-Diisocyanato-diphenylmethan sorgfältig verteilt.

Das molare NCO/OH-Verhältnis der Mischung betrug 1,1, ihre Topfzeit 8 Minuten.

Die Prüfung erfolgte wie Beispiel 1.

## Beispiel 5

100 g eines auf 50°C erwärmten linearen Polyesters auf Basis Poly-ε-Caprolacton mit Hexandiol 1,6 als Starter vom Molekulargewicht 3000 wurden mit 0,05 g Endoethylenpiperazin gründlich vermischt. In diese Mischung wurden 8,5 g eines flüssigen Gemisches aus ca. 60% 2,4'- und ca. 40% 4,4'-Diisocyanato-diphenylmethan sorgfältig verteilt.

Das molare NCO/OH-Verhältnis der Mischung betrug 1,0, ihre Topfzeit ca. 7 Minuten.

Die Prüfung erfolgte wie in Beispiel 1.

## Beispiel 6

100 g eines auf 50°C erwärmten linearen Polyesters auf Basis Poly-ε-Caprolacton mit Hexandiol-1,6, als Starter vom Molekulargewicht 3000 wurden mit 0,05 Endoethylenpiperazin gründlich vermischt. In diese Mischung wurden 9,4 g eines flüssigen Gemisches aus ca. 60% 2,4- und ca. 40% 4,4'-Diisocyanato-diphenylmethan sorgfältig verteilt.

Das molare NCO/OH-Verhältnis der Mischung betrug 1,1, ihre Topfzeit ca. 7 Minuten.

Die Prüfung erfolgte wie in Beispiel 1.

## Beispiel 7

100 g eines auf 50°C erwärmten linearen Polyesters auf Basis Poly-ε-Caprolacton mit Hexandiol 1,6 als Starter vom Molekulargewicht 3000 werden mit 0,05 g Endoethylenpiperazin und mit 0,3 g Trimethylolenpropan gründlich vermischt. In diese Mischung wurden 9,4 g eines flüssigen Gemisches aus ca. 60% 2,4- und ca. 40% 4,4'-Diisocyanato-diphenylmethan sorgfältig verteilt.

Das molare NCO/OH-Verhältnis der Mischung betrug 1,0, ihre Topfzeit ca. 6 Minuten.

Die Prüfung erfolgte wie in Beispiel 1.

## Beispiel 8

100 g eines auf 50°C erwärmten linearen Polyesters auf Basis Poly-ε-Caprolacton mit Hexandiol-1,6 als Starter vom Molekulargewicht 3000 wurden mit 0,05 g Endoethylenpiperazin und mit 0,3 g Trimethylolpropan gründlich vermischt. In diese Mischung wurden 10,3 g eines flüssigen Gemisches

6

**0 005 781**

aus ca. 60% 2,4'- und 40% 4,4'-Diisocyanato-diphenylmethan sorgfältig verteilt.
Das molare NCO/OH-Verhältnis der Mischung betrug 1,1, ihre Topfzeit ca. 6 Minuten.
Die Prüfung erfolgte wie in Beispiel 1.

Beispiel 9

100 g eines auf 50° C erwärmten linearen Hexandiol-1,6-polycarbonates vom Molekulargewicht 2160 wurden mit 0,05 g Endoethylenpiperazin gründlich vermischt. In diese Mischung wurden 11,9 g eines flüssigen Gemisches aus ca. 60% 2,4'- und ca. 40% 4,4'-Diisocyanato-diphenylmethan sorgfältig verteilt.
Das molare NCO/OH-Verhältnis der Mischung betrug 1,0, ihre Topfzeit ca. 5 Minuten.
Die Prüfung erfolgte wie in Beispiel 1.

Beispiel 10

100 g eines auf 50° C erwärmten linearen Hexandiol-1,6-polycarbonates vom Molekulargewicht 2160 wurden mit 0,05 g Endoethylenpiperazin gründlich vermischt. In diese Mischung wurden 13,1 g eines flüssigen Gemisches aus ca. 60% 2,4'- und ca. 40% 4,4'-Diisocyanato-diphenylmethan sorgfältig verteilt.
Das molare NCO/OH-Verhältnis der Mischung betrug 1,1, ihre Topfzeit 5 Minuten.
Die Prüfung erfolgte wie in Beispiel 1.

Beispiel 11

100 g eines auf 50° C erwärmten linearen Hexandiol-1,6-polycarbonates vom Molekulargewicht 2160 wurden mit 0,05 g Endoethylenpiperazin und mit 0,3 g Trimethylolpropan gründlich vermischt. In diese Mischung wurden 14,0 g eines flüssigen Gemisches aus ca. 60% 2,4'- und ca. 40% 4,4'-Diisocyanato-diphenylmethan sorgfältig verteilt.
Das molare NCO/OH-Verhältnis der Mischung betrug 1,0, ihre Topfzeit ca. 4 Minuten.
Die Prüfung erfolgte wie in Beispiel 1.

Beispiel 12

100 g eines auf 50° C erwärmten linearen Hexandiol-1,6-polycarbonates vom Molekulargewicht 2160 wurden mit 0,05 g Endoethylenpiperazin und mit 0,3 g Trimethylolpropan gründlich vermischt. In diese Mischung wurden 15,4 g eines flüssigen Gemisches aus 60% 2,4'- und 40% 4,4'-Diisocyanato-diphenylmethan sorgfältig verteilt.
Das molare NCO/OH-Verhältnis der Mischung betrug 1,1, ihre Topfzeit 4 Minuten.
Die Prüfung erfolgte wie in Beispiel 1.

7

# 0 005 781

Schälwiderstand (N/mm) gemäß DIN 53273 von Klebungen, die nach

| | 24 Stunden | | 48 Stunden | | 1 Woche reaktiviert wurden | |
|---|---|---|---|---|---|---|
| | sofort | 9 Tage | sofort | 9 Tage | sofort | 9 Tage |
| Klebstoff 1 | 0,1 | 8,0 | 0,6 | 8,0 | 0,8 | 10,7 |
| Klebstoff 2 | 1,1 | 9,0 | 2,5 | 9,0 | 2,3 | 10,5 |
| Klebstoff 3 | 2,3 | 7,8 | 3,2 | 8,1 | 3,8 | 9,6 |
| Klebstoff 4 | 4,0 | 9,7 | 4,6 | 8,6 | 6,4 | 11,0 |
| Klebstoff 5 | 0,1 | 5,7 | 0,2 | 6,4 | 0,2 | 6,1 |
| Klebstoff 6 | 0,1 | 6,2 | 0,3 | 5,8 | 0,4 | 5,7 |
| Klebstoff 7 | 0,4 | 5,2 | 0,8 | 5,8 | 0,8 | 5,8 |
| Klebstoff 8 | 0,7 | 5,6 | 1,3 | 5,4 | 1,3 | 5,6 |
| Klebstoff 9 | 0,3 | 5,7 | 0,4 | 5,1 | 0,4 | 6,0 |
| Klebstoff 10 | 1,5 | 8,0 | 1,9 | 8,0 | 2,7 | 7,4 |
| Klebstoff 11 | 0,6 | 5,8 | 0,6 | 5,1 | 0,7 | 5,7 |
| Klebstoff 12 | 1,5 | 7,7 | 1,7 | 8,0 | 1,6 | 5,9 |

## Patentansprüche

1. Verfahren zum Verkleben von Werkstoffen durch Beschichtung der Oberfläche mindestens eines der miteinander zu verklebenden Werkstoffe mit einem kautschukartigem Polyurethan, Aktivierung der so erhaltenen Beschichtung durch Einwirkung von Wärme und/oder Lösungsmitteln und Beendigung des Klebevorgangs durch Vereinigung der zu verklebenden Werkstoffoberfläche, gegebenenfalls unter Anwendung von Druck, dadurch gekennzeichnet, daß man auf die Oberfläche mindestens eines der zu verklebenden Werkstoffe eine im nichtaktivierten Zustand nichtklebende Polyurethanschicht dadurch aufbringt, daß man die Oberfläche mit einem, im wesentlichen lösungsmittelfreien, zu einem kautschukartigen Polyurethan ausreagierenden, mindesetns ein organisches Polyisocyanat und mindestens eine organische Polyhydroxylverbindung des Molekulargewichtsbereichs 62 bis 10 000 in, einem molaren NCO/OH-Verhältnis von 0,8−1,2 entsprechenden, Mengen enthaltenden Reaktionsgemisch, welches durch sorgfältiges Mischen der Komponenten bei Raumtemperatur oder wenig höherer Temperatur erhalten worden ist, beschichtet und die so erhaltene Schicht zu einem nichtklebenden, durch Einwirkung von Wärme und/oder Lösungsmitteln in den klebefähigen Zustand überführbaren Polyurethan ausreagieren läßt.

2. Ausführungsform des Verfahrens gemäß Anspruch 1, dadurch gekennzeichnet, daß man lediglich eine der zu verklebenden Werkstoffoberflächen mit einer im nichtaktivierten Zustand nichtklebenden Schicht versieht, und die Aktivierung dieser Schicht dadurch vornimmt, daß man eine zweite, nichtbeschichtete Oberfläche auf eine zur Aktivierung der Klebstoffschicht ausreichende Temperatur erhitzt und mit der beschichteten Oberfläche unter Wärme-Aktivierung der Polyurethanschicht und gleichzeitigem Verkleben der Oberflächen, gegebenenfalls unter Anwendung von Druck vereinigt.

3. Ausführungsform gemäß Anspruch 2, dadurch gekennzeichnet, daß man die zweite, nicht beschichtete Oberfläche herstellt, indem man einen, auf eine zur Aktivierung der Klebstoffschicht ausreichende Temperatur erhitzten und dadurch verflüssigten, thermoplastischen Kunststoff auf die Klebstoffschicht aufträgt.

## Claims

1. A process for bonding materials by coating the surface of at least one of the materials to be bonded to one another with a rubber-like polyurethane, acitvating the coating thus obtained by the action of heat and/or solvents and completing the bonding process by bringing the material surfaces to be bonded into contact with one another, optionally under pressure, characterised in that a polyurethane layer which is non-tacky in its non-activated form is applied to the surface of at least one of the materials to be bonded by coating the surface with a substantially solvent-free reaction mixture which reacts to form a rubber-like polyurethane and which contains at least one organic polyisocyanate and at least one organic polyhydroxyl compound of a molecular weight in the range from 62 to 10,000, in quantities corresponding to a molar NCO/OH ratio of 0.8 – 1.2, which reaction mixture has been obtained by carefully mixing the components at room temperature or at a slightly higher temperature, and the layer thus obtained is allowed to react to form a non-tacky polyurethane which can be converted into tacky form by the action of heat and/or solvents.

2. An embodiment of the process according to Claim 1, characterised in that only one of the material surfaces to be bonded is coated with a layer which is non-tacky in its non-activated form and in that this layer is activated by heating a second non-coated surface to a temperature sufficient to activate the adhesive layer and bringing it into contact with the coated surface whilst thermally activating the polyurethane layer and at the same time bonding the surfaces, optionally under pressure.

3. The embodiment according to Claim 2, characterised in that the second non-coated surface is formed by applying to the adhesive layer a thermoplastic plastic heated to a temperature sufficient to activate the adhesive layer and thus liquefied.

## Revendications

1. Procédé de collage de matériaux par enduction de la surface d'au moins l'une des matières à assembler par collage avec un polyuréthanne de nature caoutchouteuse, activation du revêtement ainsi obtenu par l'action de la chaleur et/ou de solvants et terminaison du processus de collage par réunion des surfaces des matières à coller, avec utilisation éventuelle de la pression, caractérisé en ce qu'on applique à la surface d'au moins l'une des matières à coller une couche de polyuréthanne non collante à l'état non activé, par enduction de la surface avec un mélange réactionnel essentiellement dépourvu de solvant, réagissant sous formation d'un polyuréthanne de nature caoutchouteuse, contenant au moins un polyisocyanate organique et au moins un composé organique polyhydroxylique de poids moléculaire compris dans la plage de 62 à 10 000 en quantités correspondant à un rapport molaire NCO/OH de 0,8 – 1,2, qui a été obtenu par mélange avec soin des composants à la température ambiante ou à une température un peu plus haute, et on laisse réagir la couche ainsi obtenue pour former un polyuréthanne non collant pouvant être amené à l'état collant par l'action de la chaleur et/ou de solvants.

2. Forme de réalisation du procédé suivant la revendication 1, caractérisé en ce qu'on munit une seule des surfaces des matières à assembler par collage d'une couche ne collant pas à l'état non activé, et on effectue l'activation de cette couche en chauffant une seconde surface non enduite à une température suffisante pour l'activation de la couche d'adhésif et en la réunissant avec la surface enduite tout en activant la couche de polyuréthanne par la chaleur et en collant en même temps les surfaces, éventuellement avec application d'une pression.

3. Forme de réalisation suivant la revendication 2, caractérisée en ce qu'on prépare la seconde surface non enduite en appliquant sur la couche d'adhésif une matière thermoplastique chauffée à une température suffisante pour l'activation de la couche d'adhésif et, de ce fait, fluidifiée.